(19) Europäisches Patentamt
European Patent Office
Office européen des brevets

(11) **EP 4 696 294 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
**A61H 1/02** (2006.01)   **B25J 9/00** (2006.01)

(21) Application number: **23934186.0**

(22) Date of filing: **12.05.2023**

(86) International application number:
**PCT/KR2023/006445**

(87) International publication number:
**WO 2024/219538 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2023   KR 20230051557**

(71) Applicant: **P&S Robotics Co., Ltd.
Seoul 07294 (KR)**

(72) Inventors:
• PARK, Kwang Hun
  Seoul 04153 (KR)
• LEE, Kyung Hwan
  Anyang-Si, Gyeonggi-do 14096 (KR)

(74) Representative: **Michalski Hüttermann & Partner
Patentanwälte mbB
Kaistraße 16A
40221 Düsseldorf (DE)**

(54) **GAIT TRAINING PATTERN GENERATION METHOD AND GAIT TRAINING APPARATUS**

(57) The present invention relates to: a gait training pattern generation method for generating a gait training pattern optimized for a gait trainee; and a gait training apparatus. The gait training pattern generation method may comprise the steps of: obtaining information about the lower body of a gait trainee; setting gait training conditions for the gait trainee; and generating a gait training pattern according to the information about the lower body of the gait trainee and the gait training conditions.

## FIG. 1

OBTAIN INFORMATION ABOUT LOWER BODY OF GAIT TRAINEE — S100

SET GAIT TRAINING CONDITIONS FOR GAIT TRAINEE — S200

GENERATE GAIT TRAINING PATTERN ACCORDING TO INFORMATION ABOUT LOWER BODY OF GAIT TRAINEE AND GAIT TRAINING CONDITIONS — S300

**Description**

## TECHNICAL FIELD

The present invention relates to a gait training pattern generation method and a gait training apparatus, and more particularly, to a gait training pattern generation method for generating a gait training pattern optimized for a gait trainee and a gait training apparatus.

## BACKGROUND ART

In general, a gait training apparatus is an apparatus for gait training of patients with lower body paralysis or patients with abnormalities in leg joints and muscle strength. The gait training apparatus may include a walking practice robot having joint parts that are mounted on joint portions such as a hip joint, a knee joint, and ankle joint of a walking trainee, and the joint parts respectively mounted on the joint portions are driven at a predetermined angle and speed to assist joint movement of a gait trainee.

In the related art, the gait trainee was uniformly trained using a gait training pattern that is considered only in height, stride length, and gait speed of the gait trainee without considering an interval between respective joints of the gait trainee. As a result, if the gait training pattern is not suitable for each joint of the gait trainee, each joint of the gait trainee moves unnaturally during the gait training, and thus, the gait trainee inevitably feels uncomfortable.

Thus, the gait training pattern optimized for the gait trainee, which does not cause discomfort, is required.

(Patent Document 1) Korean Patent Publication No. 10-2008-0010072

## DISCLOSURE OF THE INVENTION

## TECHNICAL PROBLEM

The present invention provides a gait training pattern generation method for generating a gait training pattern optimized for a gait trainee using information of a lower body of the gait trainee such as an interval between respective joints, and a gait training apparatus.

## TECHNICAL SOLUTION

A gait training pattern generation method according to an embodiment of the present invention may include: acquiring lower body information of a gait trainee; setting gait training conditions for the gait trainee; and generating a gait training pattern according to the lower body information of the gait trainee and the gait training conditions.

The acquiring the lower body information may include: measuring a distance between a hip joint and a knee joint of the gait trainee; measuring a distance between the knee joint and an ankle joint of the gait trainee; measuring a height of the ankle joint from a ground when standing upright; and measuring a length of a foot or shoe of the gait trainee.

The setting the gait training conditions may include setting a training stride according to the gait trainee.

The setting the gait training conditions may further include setting the height of the ankle joint from the ground during gait.

The gait training pattern generation method may further include providing a customized stride based on the lower body information of the gait trainee.

The generating the gait training pattern may include determining a gait pattern from a standard gait pattern table stored for each lower body condition.

The generating the gait training pattern may further include correcting the gait pattern by reflecting the lower body information of the gait trainee and the gait training conditions.

The correcting the gait pattern may include adjusting coordinates of each joint of the gait pattern, which are determined in the standard gait pattern table, according to the distance between the hip joint and the knee joint, the distance between the knee joint and the ankle joint, the height of the ankle joint, and a training stride.

The correcting the gait pattern may further include calculating a joint angle of each joint of the gait pattern through the adjusted coordinates of each joint of the gait pattern.

The correcting the gait pattern may further include changing the joint angle of the knee joint of the gait pattern using the length of the foot or shoe and the height of the ankle joint.

The correcting the gait pattern may further include changing the joint angle of at least one of the hip joint, the knee joint and the ankle joint at at least a portion of the gait pattern through the distance between the hip joint and the knee joint, the distance between the knee joint and the ankle joint, and the height of the shoe.

The gait training pattern generation method may further include acquiring an inclination of the ground on which the gait trainee walks, wherein the correcting the gait pattern may be performed by further reflecting the inclination of the ground.

The correcting the gait pattern may further include further adjusting the adjusted coordinates of each joint of the gait pattern by reflecting the inclination of the ground.

A gait training apparatus according to another embodiment of the present invention may include: a lower body information acquisition part configured to acquire lower body information of a gait trainee; a training setting part configured to set gait training conditions for the gait trainee; and a training pattern generation part configured to generate a gait training pattern according to the lower body information of the gait trainee and the gait training conditions.

The lower body information acquisition part may include: a joint distance acquisition part configured to acquire a distance between a hip joint and a knee joint of the gait trainee and a distance between the knee joint and an ankle joint of the gait trainee; an ankle joint height acquisition part configured to acquire a height of the ankle joint from a ground when standing upright; and a foot size acquisition part configured to acquire a length of a foot or shoe of the gait trainee.

The training setting part may include a stride setting part configured to set a training stride depending on the gait trainee.

The training setting part may further include a height setting part configured to set the height of the ankle joint from the ground during gait.

The gait training apparatus may further include a customized stride providing part configured to provide a customized stride based on the lower body information of the gait trainee.

The training pattern generation part may include: a table storage part in which a standard gait pattern table stored a gait pattern for each lower body condition is stored; and a gait pattern determination part configured to determine the gait pattern from the standard gait pattern table.

The training pattern generation part may further include a gait pattern correction part configured to correct the gait pattern by reflecting the lower body information of the gait trainee and the gait training conditions.

The gait pattern correction part may include a coordinate adjustment part configured to adjust coordinates of each joint of the gait pattern, which are determined in the standard gait pattern table, according to the distance between the hip joint and the knee joint, the distance between the knee joint and the ankle joint, the height of the ankle joint, and a training stride.

The gait pattern correction part may further include a joint angle calculation part configured to calculate a joint angle of each joint of the gait pattern through the adjusted coordinates of each joint of the gait pattern.

The gait pattern correction part may further include a joint angle changing part configured to change the joint angle of the knee joint of the gait pattern using the length of the foot or shoe and the height of the ankle joint.

The gait pattern correction part may further include a joint angle changing part configured to change the joint angle of at least one of the hip joint, the knee joint, or the ankle joint at at least a portion of the gait pattern through the distance between the hip joint and the knee joint, the distance between the knee joint and the ankle joint, and the height of the shoe.

The gait training apparatus may further include an inclination acquisition part configured to acquire an inclination of the ground on which the gait trainee walks, wherein the gait pattern correction part may be configured to correct the gait pattern by further reflecting the inclination of the ground.

The coordinate adjustment part may be configured to further adjust the adjusted coordinates of each joint of the gait pattern by reflecting the inclination of the ground.

The gait training apparatus may further include a walking practice robot that is wearable by the gait trainee and has a hip joint part, a knee joint part, and an ankle joint part, which correspond to the hip joint, the knee joint, and the ankle joint, respectively, wherein the walking practice robot may be configured to adjust positions of the hip joint part, the knee joint part and the ankle joint part so as to match the lower body information of the gait trainee and train the gait trainee according to the gait training pattern.

## ADVANTAGEOUS EFFECTS

In the gait training pattern generation method according to the embodiment of the present invention, the gait training pattern may be generated according to the lower body information of the gait trainee and the gait training conditions to generate the gait training pattern that is suitable for the gait trainee, which does not cause the discomfort to the gait trainee. That is, the distance between the hip joint and the knee joint of the gait trainee, the distance between the knee joint and the ankle joint, the height of the ankle joint from the ground when standing upright, and the length of the foot or shoe of the gait trainee may be reflected to generate the gait training pattern that is suitable for each joint of the gait trainee, and also the gait training pattern optimized for the gait trainee may be generated, and thus, each joint of the gait trainee may move naturally during the gait training so that the gait trainee feels no discomfort, and the training effect is improved.

Here, the gait pattern corresponding to the lower body information of the gait trainee may be determined from the standard gait pattern table, in which the gait pattern is stored for each lower body condition, to acquire the simple gait pattern with the high matching rate, thereby generating the optimal gait training pattern.

In addition, the gait pattern determined from the standard gait pattern table may be corrected by reflecting the length of the foot or she, etc., to prevent the foot dragging during the gait training while maintaining the movement of each joint, which is suitable for the gait trainee.

The gait training apparatus of the present invention may train the gait trainee according to the gait training pattern generated by the training pattern part through the walking practice robot, and the positions of the hip joint, the knee joint, and the ankle joint may be adjusted according to the lower body information of the gait trainee to provide the effective gait training suitable for the gait trainee.

## BRIEF DESCRIPTION OF THE DRAWINGS

FIG. 1 is a flowchart illustrating a gait training pattern generation method according to an embodiment of the present invention.

FIG. 2 is a conceptual view for explaining a change in angular pattern of a hip joint and a knee joint depending on a distance between the hip joint and the knee joint and a distance between the knee joint and an ankle joint according to an embodiment of the present invention.

FIG. 3 is a conceptual view for explaining a change in trajectory of the ankle joint depending on height setting of the ankle joint according to an embodiment of the present invention.

FIG. 4 is a conceptual view for explaining a standard gait pattern table according to an embodiment of the present invention.

FIG. 5 is a conceptual view for explaining a change in joint angle of the knee joint of a gait pattern according to an embodiment of the present invention.

FIG. 6 is a conceptual view for explaining a change in joint angle of the hip joint and the knee joint during toe off and heel contact according to an embodiment of the present invention.

FIG. 7 is a schematic view of a gait training apparatus according to another embodiment of the present invention.

FIG. 8 is a view of a walking practice robot according to another embodiment of the present invention.

## MODE FOR CARRYING OUT THE INVENTION

Hereinafter, specific embodiments will be described in more detail with reference to the accompanying drawings. The present invention may, however, be embodied in different forms and should not be construed as limited to the embodiments set forth herein. Rather, these embodiments are provided so that this invention will be thorough and complete, and will fully convey the scope of the present invention to those skilled in the art. In the descriptions, the same elements are denoted with the same reference numerals. In the figures, the dimensions of layers and regions are exaggerated for clarity of illustration. Like reference numerals refer to like elements throughout.

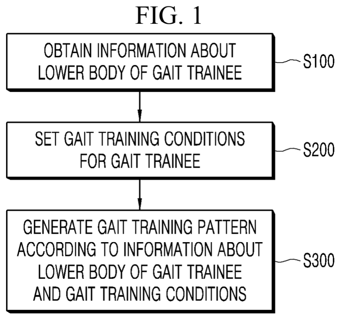

FIG. 1 is a flowchart illustrating a gait training pattern generation method according to an embodiment of the present invention.

Referring to FIG. 1, a gait training pattern generation method according to an embodiment of the present invention may include: a step (S200) of acquiring information of a lower body of a gait trainee; a step (S200) of setting gait training conditions for the gait trainee; and a step (S300) of generating a gait training pattern according to the lower body information of the gait trainee and the gait training conditions.

First, the lower body information of the gait trainee is acquired (S100). The lower body information (or the information of the lower body) of the gait trainee may be acquired, and information about the lower body such as a leg length of the gait trainee and an interval between respective joints of the leg may be acquired. Here, the lower body of the gait trainee may be directly measured, or the lower body information of the gait trainee may be input.

Next, the gait training conditions for the gait trainee are set (S200). The gait training conditions (or conditions of a gait training) for the gait trainee may be set, and a stride length, a gait speed, etc., for performing the gait training may be set. Here, the stride length and the gait speed may be input.

Next, the gait training pattern is generated based on the lower body information of the gait trainee and the gait training conditions (S300). The gait training pattern may be generated based on the lower body information of the gait trainee and the gait training conditions, and a customized gait training pattern may be generated based on the gait trainee.

Thus, in the gait training pattern generation method according to the present invention, the gait training pattern may be generated according to the lower body information of the gait trainee and the gait training conditions to generate a gait training pattern that is suitable for the gait trainee, which does not cause the discomfort to the gait trainee.

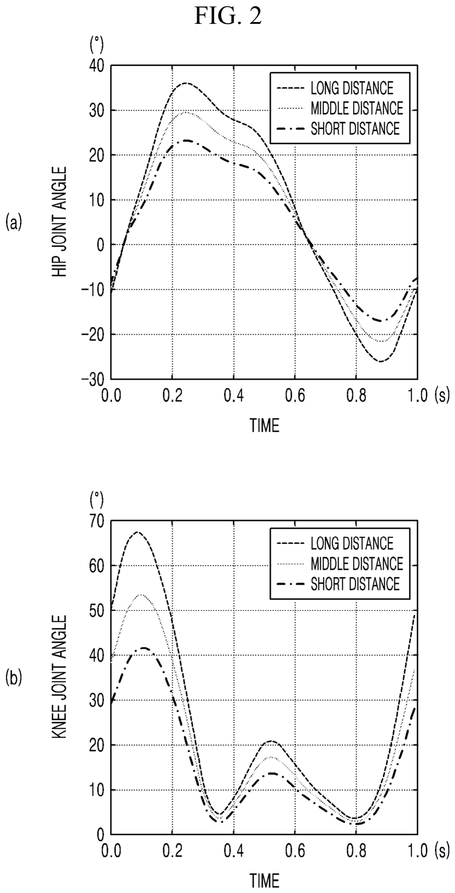

FIG. 2 is a conceptual view for explaining a change in angular pattern of a hip joint and a knee joint depending on a distance between the hip joint and the knee joint and a distance between the knee joint and an ankle joint according to an embodiment of the present invention, (a) of FIG. 2 illustrates a change in angular pattern of the hip joint, and (b) of FIG. 2 illustrates a change in angular pattern of the knee joint.

Referring to FIG. 2, the step (S100) of acquiring the lower body information may include: a step (S110) of measuring a distance between a hip joint 11 and a knee joint 12 of the gait trainee; a step (S120) of measuring a distance between the knee joint 12 and an ankle joint 13; a step (S130) of measuring a height of the ankle joint 13 from the ground when standing upright; and a step (S140) of measuring a length of a foot or shoe of the gait trainee.

The distance between the hip joint 11 and knee joint 12 of the gait trainee may be measured (S110). Rather than simply measuring length of the leg of the gait trainee, the distance between the hip joint 11 and the knee joint 12 of the gait trainee (or a length of a thigh) may be measured, and thus, movement of the hip joint 11 and the knee joint 12 and movement of the thigh (or upper leg) centered on the hip joint 11 may be naturally implemented during the gait training.

In addition, the distance between the knee joint 12 and the ankle joint 13 of the gait trainee may be measured (S120). The distance between the knee joint 12 and the ankle joint 13 of the gait trainee (or a length of the lower leg) may be measured, and thus, movement of the knee joint 12 and the ankle joint 13 and movement of the lower leg centered on the knee joint 12 may be naturally implemented during the gait training.

In addition, the height of the ankle joint 13 from the ground when standing upright may be measured (S130). The height of the ankle joint 13 from the ground may be measured when standing upright (i.e., when standing upright in place), and thus, the movement of the ankle joint 13 and the movement of the foot (or sole) of the gait trainee centered on the ankle joint 13 may be naturally implemented during the gait training. Here, if the gait trainee wears shoes, the height of the shoe may be included. Thus, it is possible to predict a trajectory of the ankle joint 13 that enables smooth toe-off and heel contact of the gait trainee while preventing the foot of the gait trainee from dragging.

In addition, the length of the foot or shoe of the gait trainee may be measured (S140). The length of the foot or shoe of the gait trainee may be measured. If the gait trainee does not wear the shoes, the length of the foot of the gait trainee may be measured. If the gait trainee wears the shoes, the length of the shoe of the gait trainee may be measured. The length of both the foot and shoe of the gait trainee may be measured in consideration of a clearance between the foot and shoe of the gait trainee.

As a result, it is possible to know the height (s) of the ankle joint 13 during gait (training) that prevents a front heel of the shoe (or toes of the gait trainee) and/or a heel of the shoe (or the heel of the gait trainee) from dragging on the ground (i.e., dragging) and to generate the gait training pattern that prevents the foot of the gait trainee from dragging.

Thus, in the gait training pattern generation method according to the present invention, the distance between the hip joint 11 and the knee joint 12 of the gait trainee, the distance between the knee joint 12 and the ankle joint 13, the height of the ankle joint 13 from the ground when standing upright, and the length of the foot or shoe of the gait trainee may be reflected to generate the gait training pattern that is suitable for each joint of the gait trainee, and also the gait training pattern optimized for the gait trainee may be generated, and thus, each joint of the gait trainee may move naturally during the gait training so that the gait trainee feels no discomfort, and the training effect is improved.

The step (S200) of setting the gait training conditions may include a step (S210) of setting a training stride depending on the gait trainee.

The training stride may be set depending on the gait trainee (S210). The training stride may be set depending on the gait trainee, and the training stride may be set in consideration of physical conditions of the gait trainee such as a height and a leg length. The trajectory of the ankle joint 13 may be determined according to the training stride set in this manner.

Here, the gait training pattern generation method according to the present invention may further include a step (S150) of providing a customized stride based on the lower body information of the gait trainee.

The customized stride length may be provided based on the lower body information of the gait trainee (S150). The customized stride may be provided based on the lower body information of the gait trainee, and the provided customized stride may be set as the training stride in the step (S210) of setting the training stride. Thus, the training stride may be set based on clinical determination of a rehabilitation therapist, and the customized stride may be provided to provide the training stride suitable for the gait trainee. For example, a maximum stride length may be determined based on the leg length of the gait trainee, a stable stride length may be acquired by considering the height of the gait trainee, and a stride range that allows natural gait suitable for the gait trainee may be calculated by reflecting the distance between the hip joint 11 and the knee joint 12, the distance between the knee joint 12 and the ankle joint 13, the height of the ankle joint 13, and the length of the foot or shoe of the gait trainee. In addition, the customized stride may be determined according to the conditions of the gait trainee within the calculated stride range, and at the beginning of the gait training, the stride may be narrowed within the stride range, and after the gait training has progressed to a certain extent, the stride may be widened and carried out.

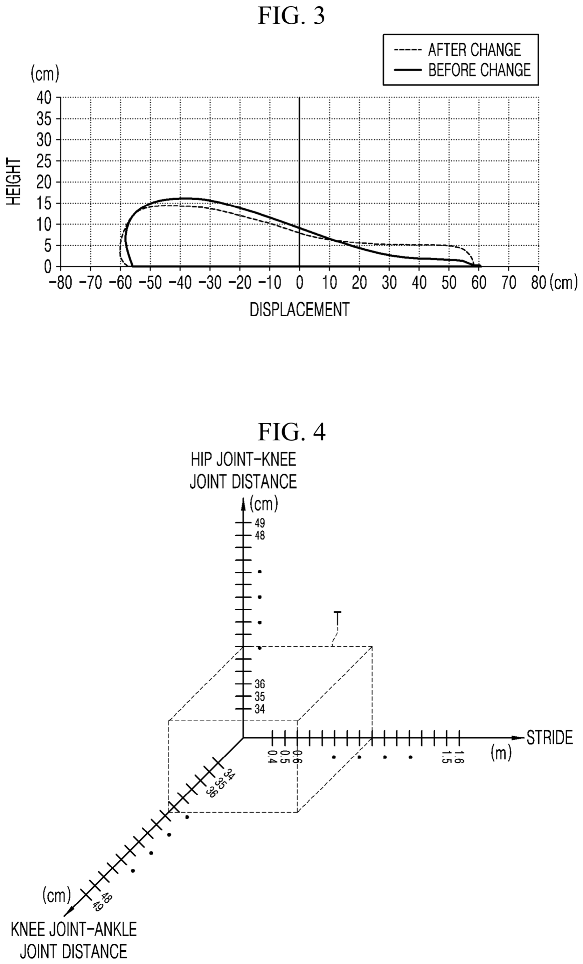

FIG. 3 is a conceptual view for explaining a change in trajectory of the ankle joint depending on height setting of the ankle joint according to an embodiment of the present invention.

Referring to FIG. 3, the step (S200) of setting the gait training conditions may further include a step (S220) of setting the height of the ankle joint 13 from the ground during the gait.

The height of the ankle joint 13 from the ground may be set during the gait (S220). During the gait (training), the height of the ankle joint 13 from the ground may be set, the height of the ankle joint 13 may be set for each time point in time (or position in a gait direction) within the training stride, and a maximum height of the ankle joint 13 for each training stride may also be set. Here, the height of the ankle joint 13 at toe off (time point) of the gait trainee during the gait and the height of the ankle joint 13 at heel contact (time point) of the gait trainee may be set, and a minimum height of the ankle joint 13 at which the foot of the gait trainee does not drag may be set even if the foot of the gait trainee (slightly) sags around the ankle joint 13 in consideration of the length of the foot or shoe of the gait trainee. Thus, the gait training pattern may be generated to prevent the foot of the gait trainee from dragging even near the toe off and heel contact of the gait trainee.

FIG. 4 is a conceptual view for explaining a standard gait pattern table according to an embodiment of the present invention.

Referring to FIG. 4, the step (S300) of generating the gait training pattern may include a step (S310) of determining a gait pattern from a standard gait pattern table T stored for each lower body condition (or condition of the lower body).

The gait pattern may be determined from the standard gait pattern table T stored for each the lower body condition (or the lower body information) (S310). The gait pattern may be stored in the standard gait pattern table T for each condition of the lower body, the gait pattern may be determined from the stored standard gait pattern table T, and the gait pattern corresponding to the lower body information of the gait trainee and the gait training conditions may be determined. Here, the standard gait pattern table T may store the gait pattern at a certain interval (or unit) for each condition, and the gait pattern corresponding to the lower body information of the gait trainee and the gait training conditions may be a gait pattern of lower body condition, which match the lower body information of the gait trainee and the gait training conditions when there is the gait pattern of lower body condition, which match (or are identical to) the lower body information of the gait trainee and the gait training conditions and also may be a gait pattern of lower body condition, which are most similar (or approximate) to the lower body information of the gait trainee and the gait training conditions when there is no gait pattern of lower body condition, which match the lower body information of the gait trainee and the gait training conditions.

For example, in the standard gait pattern table T, one gait pattern may be stored for each coordinate of the distance between the hip joint 11 and the knee joint 12 (hip joint-knee joint distance (interval)), the distance between the knee joint 12 and the ankle joint 13 (knee joint-ankle joint distance (interval)), and the stride length, and coordinates (axes) of the distance between the hip joint 11 and the knee joint 12 and the distance between the knee joint 12 and the ankle joint 13 may be coordinates (axes) of an interval (or a distance) of 1 cm, and coordinates (axes) of the stride length may be coordinates (axes) of an interval (or a distance) of 0.1 m. Here, the standard gait pattern table T may store (position) coordinate data of each joint during the gait, which are normalized by measuring the gait (pattern or trajectory) of standard group(s) for each leg length (i.e., the distance between the hip joint and the knee joint and the distance between the knee joint and the ankle joint) of a person (or a normal person) and for each stride length, and the gait pattern (or trajectory) may be generated from the lower body information of the gait trainee among the lower body conditions (or gait conditions) and the normalized gait (position) coordinate data close to the gait training conditions.

Table 1 is an example of the (position) coordinate data of each joint and shows (position) coordinate of the hip joint 11, (position) coordinate of the knee joint 12, and (position) coordinate of the ankle joint 13 at each time point.

[Table 1]

| Time point (cycle) | Hip joint | | Knee joint | | Ankle joint | |
|---|---|---|---|---|---|---|
| | X coordinate | Y coordinate | X coordinate | Y coordinate | X coordinate | Y coordinate |
| 1 | $X^{11} = 1$ | $Y^{11} = 1$ | $X^{12} = 1$ | $Y^{12} = 1$ | $X^{13} = 1$ | $Y^{13} = 1$ |
| 2 | $X^{11} = 2$ | $Y^{11} = 2$ | $X^{12} = 2$ | $Y^{12} = 2$ | $X^{13} = 2$ | $Y^{13} = 2$ |
| 3 | $X^{11} = 3$ | $Y^{11} = 3$ | $X^{12} = 3$ | $Y^{12} = 3$ | $X^{13} = 3$ | $Y^{13} = 3$ |
| 4 | $X^{11} = 4$ | $Y^{11} = 4$ | $X^{12} = 4$ | $Y^{12} = 4$ | $X^{13} = 4$ | $Y^{13} = 4$ |
| . . . . | . . . . | . . . . | . . . . | . . . . | . . . . | . . . . |
| 99 | $X^{11} = 99$ | $Y^{11} = 99$ | $X^{12} = 99$ | $Y^{12} = 99$ | $X^{13} = 99$ | $Y^{13} = 99$ |

When the (position) coordinates of each joint for each time point are connected to each other, the trajectory of each joint during the gait may be known, and the trajectories of the respective joints may be coupled to form the gait pattern. Not only the positions of the respective joints but also the characteristic points such as the toes and the heels may be further subdivided, and the (position) coordinates of the toes and the (position) coordinates of the heels may also be stored in the normalized gait (position) coordinate data (or the standard gait pattern table). Therefore, in the gait training pattern generation method according to the present invention, the gait pattern corresponding to the lower body information of the gait trainee may be determined from the standard gait pattern table T in which the gait pattern is stored for each the lower body condition to acquire the gait pattern that is simple but has a high matching rate, thereby generating the optimal gait training pattern.

The gait pattern may vary depending on race, and the standard gait pattern table T may store the gait patterns for each race by being categorized by the race.

The step (S300) of generating the gait training pattern may further include a step (S320) of correcting the gait pattern by reflecting the lower body information of the gait trainee and the gait training conditions.

The above gait pattern may be corrected by reflecting the lower body information of the gait trainee and the gait training conditions (S320). If there is no gait pattern of the lower body condition, which match the lower body information of the gait trainee and the gait training conditions, and the gait pattern is a gait pattern of the lower body condition, which are most similar to the lower body information of the gait trainee and the gait training conditions, the gait pattern may be corrected by reflecting the lower body information of the gait trainee and the gait training conditions, and a gait pattern that matches (or coincides with) the lower body information of the gait trainee and the gait training conditions may be acquired (or acquired).

The step (S320) of correcting the gait pattern may include a step (S321) of adjusting the coordinates of each joint of the gait pattern determined in the standard gait pattern table T according to the distance between the hip joint 11 and the knee joint 12, the distance between the knee joint 12 and the ankle joint 13, the height of the ankle joint 13, and the training stride.

The coordinates of each joint of the gait pattern determined in the standard gait pattern table T may be adjusted according to the distance between the hip joint 11 and the knee joint 12, the distance between the knee joint 12 and the ankle joint 13, the height of the ankle joint 13, and the training stride. The (position) coordinates of each joint of the gait pattern, which is determined in the standard gait pattern table T, may be adjusted (or processed) according to the distance between the hip joint 11 and the knee joint 12, the distance between the knee joint 12 and the ankle joint 13, the height of the ankle joint 13, and the training stride, and also, Y coordinate data of each joint may be adjusted from the (position) coordinates of each joint of the gait pattern according to the distance between the hip joint 11 and the knee joint 12, the distance between the knee joint 12 and the ankle joint 13, and the height of the ankle joint 13, and X coordinate data of each joint may be adjusted from the (position) coordinates of each joint of the gait pattern according to the training stride.

For example, the adjusted Y coordinate data $Y^{An}_i$ of each joint and the adjusted X coordinate data $X^{An}_i$ of each joint may be expressed by following Equations (1) and (2).

$$Y_i^{An} = Y_i^n \frac{(hip\ joint - knee\ joint\ distance, knee\ joint - ankle\ joint\ distance)}{(hip\ joint - knee\ joint\ distance, knee\ joint - ankle\ join\ distance\ of\ determined\ gait\ pattern)} \quad \cdots (1)$$

$$X_i^{An} = X_i^n \frac{training\ stride}{determined\ stride\ of\ gait\ pattern} \quad \cdots (2)$$

Here, i represents an i-th time point (or i-th cycle), n represents a number of each joint, and also, the hip joint is 11, the knee joint is 12, and the ankle joint is 13. In addition, An represents an n joint of which (position) coordinates are adjusted.

As a result, the lower body information of the gait trainee and the (position) coordinates of each joint at each time point, which are suitable for (or match) the gait training conditions may be acquired.

In addition, the step (S320) of correcting the gait pattern may further include a step (S322) of calculating a joint angle of each joint of the gait pattern through the adjusted coordinates of each joint of the gait pattern.

The joint angle of each joint of the gait pattern may be calculated through the coordinates of each joint of the gait pattern (S322). The joint angle of each joint of the gait pattern may be calculated through the adjusted coordinates of each joint of the gait pattern, and an inclination angle between the hip joint 11 and the knee joint 12 and an inclination angle between the knee joint 12 and the ankle joint 13 at each time point may be calculated, and the adjusted joint angle of each joint of the gait pattern may be calculated. Thus, the trajectory of each joint that is suitable for (or matches) the lower body information of the gait trainee and the gait training conditions may be acquired.

For example, an inclination angle $\theta^{112}_i$ between the hip joint 11 and the knee joint 12 at each time point may be expressed by following Equation (3), and an inclination angle $\theta^{123}_i$ between the knee joint 12 and the ankle joint 13 may be expressed by following Equation (4).

$$\theta_i^{112} = \tan^{-1} \frac{Y_i^{A12} - Y_i^{A11}}{X_i^{A12} - X_i^{A11}} \quad \dots (3)$$

$$\theta_i^{123} = \tan^{-1} \frac{Y_i^{A13} - Y_i^{A12}}{X_i^{A13} - X_i^{A12}} \quad \dots (4)$$

Here, i represents an i-th time point (or i-th cycle), 112 represents the hip joint-knee joint, 123 represents the knee joint-ankle joint, A11 represents the (position) coordinate-adjusted hip joint, A12 represents the (position) coordinate-adjusted knee joint, and A13 represents the (position) coordinate-adjusted ankle joint.

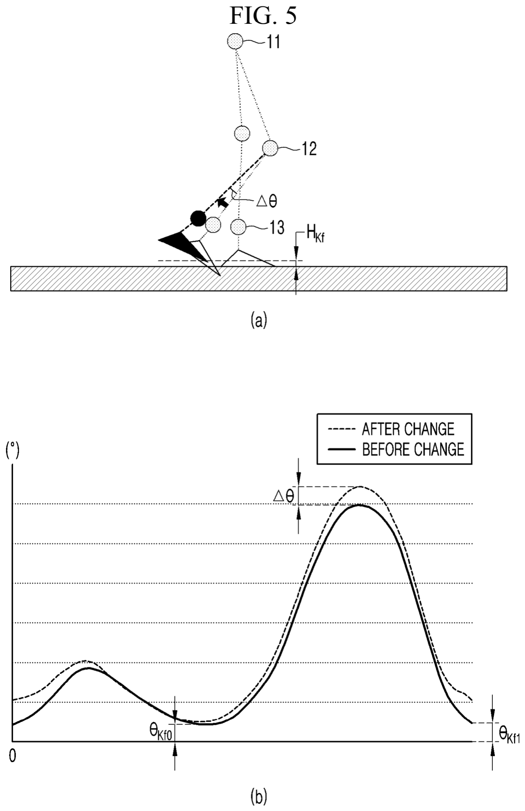

FIG. 5 is a conceptual view for explaining a change in joint angle of the knee joint of the gait pattern according to an embodiment of the present invention, (a) of FIG. 5 is a schematic view of the lower body that is changed in joint angle of the knee joint, and (b) of FIG. 5 illustrates a change in joint angle (or change in trajectory) of the knee joint for each time point according to the length of the foot or shoe.

Referring to FIG. 5, the step (S320) of correcting the gait pattern may further include a step (S323) of changing the joint angle of the knee joint 12 of the gait pattern using the length of the foot or shoe and the height of the ankle joint 13.

The joint angle of the knee joint 12 of the gait pattern may be changed using the length of the foot or shoe and the height of the ankle joint 13 (S323). To prevent the toes (or the forefoot) and/or the heel (or the heel of the shoe) from dragging during a swing phase time point during the gait training, the joint angle of the knee joint 12 of the gait pattern at least at some time point(s) may be changed using the length of the foot or shoe and the height of the ankle joint 13, a maximum flexion angle of the knee joint 12 (or an angle of the knee joint at a time point at which the knee joint is changed from flexion to extension) may be changed, and an angle (or joint angle) of the knee joint 12 at other time point(s) may be naturally adjusted according to the maximum flexion angle of the knee joint 12.

For example, in the step (S323) of changing the joint angle of the knee joint 12 of the gait pattern, the maximum flexion angle of the knee joint 12 may be converted (or changed) by reflecting the maximum flexion angle of the knee joint 12, the length of the foot or shoe, and a drag avoidance height $H_{Kf}$. In addition, a shape having a gradual change curve of a cosine (cos) function may be reflected (or added) to the trajectory of the knee joint 12 (or change in angle of the knee joint at each time point) to generate a smooth change in trajectory of the knee joint 12 (or change in angle of the knee joint).

Here, the angle of the knee joint 12 while the knee joint 12 is flexed may be expressed by following Equation (5), and the angle of the knee joint 12 while the knee joint 12 is extended may be expressed by following Equation (6).

$$\theta_i^{Ka} = ((\theta_i^K - \theta^{Kf0}) \times \frac{(\theta^{Kf} + \Delta\theta)}{\theta^{Kf}}) + \theta^{Kf0} \quad \dots (5)$$

$$\theta_i^{Ka} = ((\theta_i^K - \theta^{Kf1}) \times \frac{(\theta^{Kf} + \Delta\theta)}{\theta^{Kf}}) + \theta^{Kf1} \quad \dots (6)$$

Here, i represents an i-th time point (or i-th cycle), K represents the knee joint, and Ka represents the adjusted (or converted ) knee joint. In addition, $\theta^{Kf0}$ represents an angle of the knee joint 12 at a start time point of the conversion (or change), and $\theta^{Kf1}$ represents an angle of the knee joint 12 at an end time point of the conversion. In addition, $\theta^{Kf}$ represents a maximum flexion angle of the knee joint 12 before the change, and $\Delta\theta$ represents an angle (amount) converted (or changed) from the maximum flexion angle of the knee joint 12 before the change.

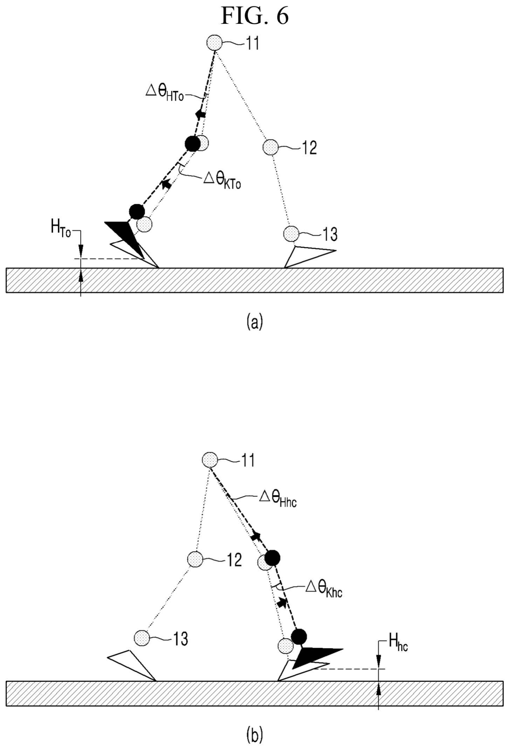

FIG. 6 is a conceptual view for explaining a change in joint angle of the hip joint and the knee joint during toe off and heel contact according to an embodiment of the present invention, (a) of FIG. 6 illustrates a change in joint angle of the hip joint and the knee joint during the toe off, and (b) of FIG. 6 illustrates a change in joint angle of the hip joint and knee joint during the heel contact.

Referring to FIG. 6, the step (S320) of correcting the gait pattern may further include a step (S324) of changing a joint angle of at least one of the hip joint 11, the knee joint 12 and the ankle joint 13 at at least a portion of the gait pattern through the distance between the hip joint 11 and the knee joint 12, the distance between the knee joint 12 and the ankle joint 13, and the height of the shoe.

The joint angle of at least one of the hip joint 11, the knee joint 12 and the ankle joint 13 in at least a portion of the gait pattern through the distance between the hip joint 11 and the knee joint 12, the distance between the knee joint 12 and the ankle joint 13, and the height of the shoe may be changed (S324). The joint angle of at least one of the hip joint 11, the knee joint 12, or the ankle joint 13 may be changed at least some time points in the gait pattern through the distance between the hip joint 11 and the knee joint 12, the distance between the knee joint 12 and the ankle joint 13 and the height of the shoe, the trajectory of the ankle joint 13 may be supplemented as in FIG. 6, and the gait training pattern that is suitable for (or matches) the lower body information of the gait trainee and the gait training conditions may be generated.

For example, the trajectory of the ankle joint 13 may be supplemented by applying (or changing) the height at the toe-off time point and/or the heel-contact time point, and the height of the ankle joint 13 at the toe-off time point (or the height of the toe or the front heel of the shoe) may be changed, and the height of the ankle joint 13 at the heel-contact time point (or the height of the heel or the back of the shoe) may be changed. Here, the change in angle $\Delta\theta_{HTo}$ of the hip joint 11 and the change in angle $\Delta\theta_{KTo}$ of the knee joint 12 (at the toe-off time point) that have to be secured through the distance between the hip joint 11 and the knee joint 12, the distance between the knee joint 12 and the ankle joint 13, and the height of the shoe may be calculated by reflecting a toe-off height $H_{To}$ to be changed at the toe-off time point, and then, a trajectory change formula of the knee joint 12 in Equation (5) may be applied to change the angles of the hip joint 11 and the knee joint 12 so that the toe-off height occurs, and also, the change in angle $\Delta\theta_{Hhc}$ of the hip joint 11 and the change in angle $\Delta\theta_{Khc}$ of the knee joint 12 (at the heel-contact time point) that has to be secured through the distance between the hip joint 11 and the knee joint 12, the distance between the knee joint 12 and the ankle joint 13, and the height of the shoe may be calculated by reflecting a heel-contact height $H_{hc}$ to be changed at the heel-contact time point, and then, the angles of the hip joint and the knee joint may be changed so that the above heel-contact height occurs by applying the knee joint trajectory changing formula of Equation (6). Here, the toe-off height $H_{To}$ to be changed at the toe-off time point may be reflected based on the clinical determination of the rehabilitation therapist, and the heel-contact height $H_{hc}$ to be changed at the heel-contact time point may be reflected.

Thus, in the gait training pattern generation method according to the present invention, the gait pattern determined from the standard gait pattern table T may be corrected by reflecting the length of the foot or she of the training trainee, etc., to prevent the foot dragging during the gait training while maintaining the movement of each joint, which is suitable for the gait trainee.

The gait training pattern generation method according to the present invention may further include a step (S250) of acquiring an inclination of the ground on which the gait trainee walks.

The gait trainee may acquire the inclination of the ground on which the gait trainee walks (S250). The gait trainee may acquire an inclination of the ground on which the gait trainee walks (trains), and may acquire an inclination of the ground by directly measuring the inclination of the ground, or may acquire an inclination of the ground by providing an inclination set for effective gait training.

Here, the step (S320) of correcting the gait pattern may be performed by further reflecting the inclination of the ground. As the inclination of the ground increases, more gait propulsion force may be required, and thus, the trajectory of each of the hip joint 11 and knee joint 12 may be changed (or vary) depending on the inclination of the ground.

Here, the step (S320) of correcting the gait pattern may further include a step (S325) of further adjusting the adjusted coordinates of each joint of the gait pattern by reflecting the inclination of the ground.

The adjusted coordinates of each joint of the gait pattern may be further adjusted to reflect the inclination of the ground (S325). The adjusted coordinates of each joint of the gait pattern may be further adjusted to reflect the inclination of the ground, and the coordinates of each joint of the gait pattern may be adjusted (or changed) according to the inclination of the ground so that the gait propulsion force is generated well, and the trajectories of the hip joint 11 and knee joint 12 are changed.

For example, displacement of each coordinate according to the inclination of the ground may be expressed by following Equations (7) and (8).

$$\Delta X = (\text{training stride}/2) \times (1-\cos\theta_t \quad \ldots(7)$$

$$\Delta Y = (\text{training stride}/2) \times \sin\theta_t \quad \ldots(8)$$

Here, $\theta_t$ represents the inclination angle of the ground.

Thus, in the gait training pattern generation method according to the present invention, a customized gait training pattern may be generated according to the gait trainee even when the inclination occurs on the ground.

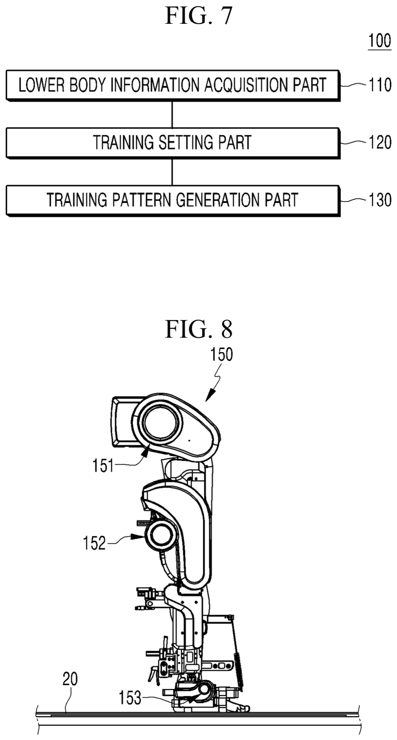

FIG. 7 is a schematic view of a gait training apparatus according to another embodiment of the present invention.

Referring to FIG. 7, a gait training apparatus according to another embodiment of the present invention will be described in more detail. However, any details duplicated with those described above in relation to the gait training generation method according to an embodiment of the present invention will be omitted.

A gait training apparatus 100 according to another embodiment of the present invention may include: a lower body information acquisition part 110 that acquire lower body information of a gait trainee; a training setting part 120 that set gait training conditions for the gait trainee; and a training pattern generation part 130 that generates a gait training pattern according to the lower body information of the gait trainee and the gait training conditions.

The lower body information acquisition part 110 may acquire the lower body information of the gait trainee and may acquire information about the lower body, such as a leg length of the gait trainee and an interval between respective joints of the leg. Here, the lower body information acquisition part 110 may directly measure the lower body of the gait trainee or may receive the lower body information of the gait trainee. For example, the lower body information acquisition part 110 may acquire the lower body information of the gait trainee through a walking practice robot 150.

The training setting part 120 may set the gait training conditions (or conditions of a gait training) for the gait trainee and may set a stride length, a gait speed, etc., for performing gait training. Here, the stride length and the gait speed may be input.

The training pattern generation part 130 may generate a gait training pattern based on the lower body information of the gait trainee and the gait training conditions and may generate a customized gait training pattern according to the gait trainee.

Thus, the gait training apparatus 100 according to the present invention may generate the gait training pattern according to the lower body information of the gait trainee and the gait training conditions to generate the gait training pattern that is suitable for the gait trainee without causing the gait trainee to feel any discomfort.

The lower body information acquisition part 110 may include: a joint distance acquisition part that acquires a distance between a hip joint and a knee joint of the gait trainee and a distance between the knee joint and an ankle joint; an ankle joint height acquisition part that acquires a height of the ankle joint from a ground 20 when standing upright; and a foot size acquisition part that acquires a length of a foot or shoe of the gait trainee. The joint distance acquisition part may acquire the distance between the hip joint and the knee joint of the gait trainee and the distance between the knee joint and the ankle joint and may directly measure the distance (or interval) or input the measured value. Rather than simply acquiring (or measuring) the leg length of the gait trainee, the distance between the hip joint and the knee joint (or a length of the thigh) of the gait trainee may be acquired, and the distance between the knee joint and the ankle joint (or a length of the lower leg) of the gait trainee may be measured to naturally implement movement of the hip joint, the knee joint, and the ankle joint, movement of the thigh (or upper leg) centered on the hip joint, and movement of the lower leg centered on the knee joint during the gait training.

The ankle joint height acquisition part may acquire a height of the ankle joint from the ground 20 when standing upright (i.e., when standing upright in place) and may measure the height of the ankle joint directly or input the measured value. As a result, the movement of the ankle joint and the movement of the foot (or sole) of the gait trainee centered on the ankle joint may be naturally implemented during the gait training. Here, if the gait trainee wears shoes, the height of the shoes may be included in the height of the ankle joint. Thus, it is possible to predict a trajectory of the ankle joint that enables smooth toe-off and heel contact of the gait trainee while preventing the foot of the gait trainee from dragging.

The foot size acquisition part may acquire the length of the foot or shoe of the gait trainee and may measure the length of the foot or shoe directly or input the measured value. The foot size acquisition part may measure the length of the foot of the gait trainee when the gait trainee does not wear the shoes and may measure the length of the shoes of the gait trainee when the gait trainee wears the shoes. The length of both the foot and shoe of the gait trainee may be measured in consideration of a clearance between the foot and shoe of the gait trainee.

As a result, it is possible to know the height(s) of the ankle joint during gait (training) that prevents a front heel of the shoe (or toes of the gait trainee) and/or a heel of the shoe (or the heel of the gait trainee) from dragging on the ground (i.e., dragging) and to generate the gait training pattern that prevents the foot of the gait trainee from dragging.

The lower body information acquisition part 110 may naturally (or automatically) acquire (or measure) the distance between the hip joint and the knee joint, the distance between the knee joint and the ankle joint, and the height of the ankle joint by adjusting positions of the hip joint part 151, the knee joint part 152, and the ankle joint part 153 of the walking practice robot 150 so as to be suitable for the hip joint, the knee joint, and the ankle joint.

Thus, the gait training apparatus 100 according to the present invention may generate a gait training pattern suitable for each joint of the gait trainee by reflecting the distance between the hip joint and the knee joint of the gait trainee, the distance between the knee joint and the ankle joint, the height of the ankle joint from the ground 20 when standing upright, and the length of the foot or shoe of the gait trainee and may generate a gait training pattern optimized for the gait trainee, and thus, each joint of the gait trainee may move naturally during the gait training so that the gait trainee feels no discomfort, and the training effect is improved.

The training setting part 120 may include a stride setting part that sets a training stride according to the gait trainee. The stride setting part may set the training stride according to the gait trainee and may set the training stride in consideration of physical conditions of the gait trainee such as a height and a leg length. The trajectory of the ankle joint may be determined according to the training stride set in this manner.

In addition, the training setting part 120 may further include a height setting part that sets the height of the ankle joint from the ground 20 during the gait. The height setting part may set a height of the ankle joint from the ground 20 during the gait and may set a height of the ankle joint for each time point (or position in a gait direction) within the training stride and may also set a maximum height of the ankle joint for each training stride. Here, the height of the ankle joint at toe off (time point) of the gait trainee during the gait and the height of the ankle joint at heel contact (time point) of the gait trainee may be set, and a minimum height of the ankle joint at which the foot of the gait trainee does not drag may be set even if the foot of the gait trainee (slightly) sags around the ankle joint in consideration of the length of the foot or shoe of the gait trainee. Thus, the gait training pattern may be generated to prevent the foot of the gait trainee from dragging even near the toe off and heel contact of the gait trainee.

The gait training apparatus 100 according to the present invention may further include a customized stride providing part that provides a customized stride based on the lower body information of the gait trainee. The customized stride providing part may provide a customized stride based on the lower body information of the gait trainee, and the provided customized stride may be set as the training stride in the stride setting part. Thus, the training stride may be set based on clinical determination of a rehabilitation therapist, and the customized stride may be provided to provide the training stride suitable for the gait trainee. For example, a maximum stride length may be determined based on the leg length of the gait trainee, a stable stride length may be obtained by considering the height of the gait trainee, and a stride range that allows natural gait suitable for the gait trainee may be calculated by reflecting the distance between the hip joint 11 and the knee joint, the distance between the knee joint and the ankle joint, the height of the ankle joint, and the length of the foot or shoe of the gait trainee. In addition, the customized stride may be determined according to the conditions of the gait trainee within the calculated stride range, and at the beginning of the gait training, the stride may be narrowed within the stride range, and after the gait training has progressed to a certain extent, the stride may be widened and carried out.

The training pattern generation part 130 may include: a table storage part in which a standard gait pattern table stored a gait pattern for each lower body condition is stored; and a gait pattern determination part that determines the gait pattern from the standard gait pattern table. The table storage part may store the standard gait pattern table that stores the gait patterns for each lower body condition, and the gait patterns may be stored in the standard gait pattern table for each lower body condition, and thus, the standard gait pattern table may be stored.

The gait pattern determination part may determine the gait pattern from the standard gait pattern table, may determine the gait pattern from the standard gait pattern table stored in the table storage part, and may determine the gait pattern corresponding to the lower body information of the gait trainee and the gait training conditions.

Here, the standard gait pattern table may store the gait pattern at a certain interval (or unit) for each condition, and the gait pattern corresponding to the lower body information (or the information of the lower body) of the gait trainee and the gait training conditions may be a gait pattern of the lower body condition, which match the lower body information of the gait trainee and the gait training conditions when there is the gait pattern of the lower body condition, which match (or are identical to) the lower body information of the gait trainee and the gait training conditions and also may be a gait pattern of the lower body condition, which are most similar (or approximate) to the lower body information of the gait trainee and the gait training conditions when there is no gait pattern of the lower body condition, which match the lower body information of the gait trainee and the gait training conditions.

For example, in the standard gait pattern table, one gait pattern may be stored for each coordinate of the distance between the hip joint and the knee joint (hip joint-knee joint distance (interval)), the distance between the knee joint and the ankle joint (knee joint-ankle joint distance (interval)), and the stride length, and coordinates (axes) of the distance between the hip joint and the knee joint and the distance between the knee joint and the ankle joint may be coordinates (axes) of an interval (or a distance) of 1 cm, and coordinates (axes) of the stride length may be coordinates (axes) of an interval (or a distance) of 0.1 m. Here, the standard gait pattern table may store (position) coordinate data of each joint during the gait, which are normalized by measuring the gait (pattern or trajectory) of standard group(s) for each leg length (i.e., the distance between the hip joint and the knee joint and the distance between the knee joint and the ankle joint) of a person (or a normal person) and for each stride length, and the gait pattern (or trajectory) may be generated from the lower body information of the gait trainee among the lower body conditions (or gait conditions) and the normalized gait (position) coordinate data close to the gait training conditions.

The training pattern generation part 130 may further include a gait pattern correction part that corrects the gait pattern by reflecting the lower body information of the gait trainee and the gait training conditions. The gait pattern correction part may correct the gait pattern by reflecting the lower body information of the gait trainee and the gait training conditions, and if there is no gait pattern of the lower body condition, which match the lower body information of the gait trainee and the gait training conditions, and the gait pattern is a gait pattern of the lower body condition, which are most similar to the lower body information of the gait trainee and the gait training conditions, the gait pattern may be corrected by reflecting the lower body information of the gait trainee and the gait training conditions, and a gait pattern that matches (or coincides with) the lower body information of the gait trainee and the gait training conditions may be obtained (or acquired).

Here, the gait pattern correction part may include a coordinate adjustment part that adjusts the coordinates of each joint of the gait pattern determined in the standard gait pattern table according to the distance between the hip joint and the knee joint, the distance between the knee joint and the ankle joint, the height of the ankle joint, and the training stride. The coordinate adjustment part may adjust (or process) the (position) coordinates of each joint of the gait pattern, which is determined in the standard gait pattern table, according to the distance between the hip joint and the knee joint, the distance between the knee joint and the ankle joint, the height of the ankle joint, and the training stride, may adjust Y coordinate data of each joint from the (position) coordinates of each joint of the gait pattern according to the distance between the hip joint and the knee joint, the distance between the knee joint and the ankle joint, and the height of the ankle joint, and may adjust X coordinate data of each joint from the (position) coordinates of each joint of the gait pattern according to the training stride.

For example, the adjusted Y coordinate data $Y^{An}_i$ of each joint and the adjusted X coordinate data $X^{An}_i$ of each joint may be expressed by Equations (1) and (2) described above in relation to the gait training pattern generation method according to an embodiment of the present invention.

As a result, the lower body information of the gait trainee and the (position) coordinates of each joint at each time point, which are suitable for (or match) the gait training conditions may be acquired.

In addition, the gait pattern correction part may further include a joint angle calculation part that calculates a joint angle of each joint of the gait pattern through the adjusted coordinates of each joint of the gait pattern. The joint angle calculation part may calculate the joint angle of each joint of the gait pattern through the adjusted coordinates of each joint of the gait pattern, may calculate an inclination angle between the hip joint and the knee joint and an inclination angle between the knee joint and the ankle joint at each time point, and may calculate the adjusted joint angle of each joint of the gait pattern. Thus, the trajectory of each joint that is suitable for (or matches) the lower body information of the gait trainee and the gait training conditions may be acquired.

For example, an inclination angle $\theta^{112}_i$ between the hip joint and the knee joint and an inclination angle $\theta^{123}_i$ between the knee joint and the ankle joint at each time point may be expressed by Equations (3) and (4) described above in relation to the gait training pattern generation method according to an embodiment of the present invention.

In addition, the gait pattern correction part may further include a joint angle changing part that changes the joint angle of the knee joint of the gait pattern using the length of the foot or shoe and the height of the ankle joint. The joint angle changing part may change the joint angle of the knee joint of the gait pattern by using the length of the foot or shoe and the height of the ankle joint and may change the joint angle of the knee joint of the gait pattern at least at some time point(s) by using the length of the foot or shoe and the height of the ankle joint to prevent the toe (or shoe forefoot) from dragging and/or heel (or shoe heel) from dragging at a swing phase time point during the gait training. Here, the joint angle changing part can change a maximum flexion angle of the knee joint (or the angle of the knee joint at a time point at which the knee joint is changed from flexion to extension), and may naturally adjust the angle (or joint angle) of the knee joint at other time point(s) according to the maximum flexion angle of the knee joint.

For example, the joint angle changing part may convert (or change) the maximum flexion angle of the knee joint by reflecting the maximum flexion angle of the knee joint, the length of the foot or shoe, and the drag avoidance height $H_{Kf}$. In addition, a shape having a gradual change curve of a cosine (cos) function may be reflected (or added) to the trajectory of the knee joint (or change in angle of the knee joint at each time point) to generate a smooth change in trajectory of the knee joint (or change in angle of the knee joint).

Here, the angle of the knee joint while the knee joint is flexed and the angle of the knee joint while the knee joint is extended may be expressed by Equations (5) and (6) described above in relation to the gait training pattern generation method according to an embodiment of the present invention.

The gait pattern correction part may further include a joint angle changing part that changes the joint angle of at least one of the hip joint, the knee joint and the ankle joint at at least a portion of the gait pattern through the distance between the hip joint and the knee joint, the distance between the knee joint and the ankle joint, and the height of the shoe. The joint angle changing part may change the joint angle of at least one of the hip joint, the knee joint and the ankle joint at least some time points in the gait pattern through the distance between the hip joint and the knee joint, the distance between the knee joint and the ankle joint and the height of the shoe, may supplement the trajectory of the ankle joint , and may generate the gait training pattern that is suitable for (or matches) the lower body information of the gait trainee and the gait training conditions.

For example, the trajectory of the ankle joint may be supplemented by applying (or changing) the height at the toe-off time point and/or the heel-contact time point, and the height of the ankle joint 13 at the toe-off time point (or the height of the toe or the front heel of the shoe) may be changed, and the height of the ankle joint at the heel-contact time point (or the height of the heel or the back of the shoe) may be changed. Here, the change in angle $\Delta\theta_{HTo}$ of the hip joint and the change in angle $\Delta\theta_{KTo}$ of the knee joint (at the toe-off time point) that have to be secured through the distance between the hip joint and the knee joint, the distance between the knee joint and the ankle joint, and the height of the shoe may be calculated by reflecting a toe-off height $H_{To}$ to be changed at the toe-off time point, and then, a trajectory change formula of the knee joint in Equation (5) may be applied to change the angles of the hip joint and the knee joint so that the toe-off height occurs, and also, the change in angle $\Delta\theta_{Hhc}$ of the hip joint and the change in angle $\Delta\theta_{Khc}$ of the knee joint (at the heel-contact time point) that has to be secured through the distance between the hip joint and the knee joint, the distance between the knee joint and the ankle joint, and the height of the shoe may be calculated by reflecting a heel-contact height $H_{hc}$ to be changed at the heel-contact time point, and then, the angles of the hip joint and the knee joint may be changed so that the above heel-contact height occurs by applying the knee joint trajectory changing formula of Equation (6).

Here, the toe-off height $H_{To}$ to be changed at the toe-off time point may be reflected based on the clinical determination of the rehabilitation therapist, and the heel-contact height $H_{hc}$ to be changed at the heel-contact time point may be reflected.

In addition, the joint angle changing part may perform (or implement) only one of changing in joint angle of the knee joint of the gait pattern using the length of the foot or shoe and the height of the ankle joint and changing in joint angle of at least one of the hip joint, the knee joint, or the ankle joint at at least some time points in the gait pattern through the distance between the hip joint and the knee joint, the distance between the knee joint and the ankle joint, and the height of the shoe, or may perform both the changing.

Thus, the gait training apparatus 100 according to the present invention may correct the gait pattern determined from the standard gait pattern table by reflecting the length of the foot or she of the training trainee, etc., to prevent the foot dragging during the gait training while maintaining the movement of each joint, which is suitable for the gait trainee.

The gait training apparatus 100 according to the present invention may further include an inclination acquisition part that acquires an inclination of the ground on which the gait trainee walks.

The inclination acquisition part may acquire an inclination of the ground 20 on which the gait trainee walks (trains) and may acquire an inclination of the ground by directly measuring the inclination of the ground 20, or may acquire an inclination of the ground 20 by setting (providing) an inclination set for effective gait training.

In addition, the gait pattern correction part may correct the gait pattern by further reflecting the inclination of the ground 20. As the inclination of the ground 20 increases, more gait propulsion force may be required, and thus, the gait pattern correction part may change (or vary in) the trajectory of each of the hip joint and the knee joint according to the inclination of the ground 20.

Here, the coordinate adjustment part may further adjust the adjusted coordinates of each joint of the gait pattern by reflecting the inclination of the ground 20. The coordinate adjustment part may further adjust the adjusted coordinates of each joint of the gait pattern to reflect the inclination of the ground 20, may adjust (change) the coordinates of each joint of the gait pattern according to the inclination of the ground 20 so that the gait propulsion force is generated well, and may change the trajectories of the hip joint and knee joint.

For example, the displacement of each coordinate according to the inclination of the ground 20 may be expressed by Equations (7) and (8) described above in relation to the gait training pattern generation method according to an embodiment of the present invention.

Thus, the gait training apparatus 100 according to the present invention may generate a customized gait training pattern according to the gait trainee even when the inclination occurs on the ground 20.

FIG. 8 is a view of a walking practice robot according to another embodiment of the present invention.

Referring to FIG. 8, a gait training apparatus 100 according to the present invention may further include a walking practice robot 150 that is worn by a gait trainee and has a hip joint part 151, a knee joint part 152, and an ankle joint part 153, which correspond to a hip joint, a knee joint, and an ankle joint, respectively.

The walking practice robot 150 may be worn on a lower leg (for example, a leg) of the walking trainee to assist gait training of the gait trainee(s) that include(s) patients with impaired nerve functions such as stroke or Parkinson's disease, patients with unbalanced muscle development, patients with lower body paralysis, or patients with abnormalities in leg joints and muscle strength.

Here, the walking practice robot 150 may have the hip joint part 151, the knee joint part 152, and the ankle joint part 153, which correspond to the hip joint, the knee joint, and the ankle joint, respectively. The hip joint part 151 may be provided to correspond to a position of the hip joint of the gait trainee and may also operate the hip joint of the gait trainee. For example, the hip joint part 151 may be coupled to an upper portion of the knee joint part 152, and may be coupled to the leg (i.e., the hip joint portion) of the gait trainee by surrounding the hip joint portion of the gait trainee and may include a leg fixing member so that a portion of the leg (e.g., the hip joint portion) of the gait trainee is received, and the received portion of the leg (e.g., the hip joint portion) is fixed by a belt. In addition, the hip joint part 151 may provide a frame to maintain the hip joint of the gait trainee in a correct posture by externally rotating and/or internally rotating the hip joint through flexion and extension of the hip joint.

The knee joint part 152 may be provided to correspond to the knee joint of the gait trainee and may also operate the knee joint of the gait trainee. For example, the knee joint part 152 may be coupled to an upper portion of the ankle joint part 153 and may be coupled to the leg (i.e., the knee joint part) of the gait trainee by surrounding the knee joint portion of the gait trainee, and the knee joint part 152 may also include the leg fixing member and fix the received leg portion (e.g., the knee joint portion) with the belt in a state in which a portion of the leg (e.g., the knee joint portion) of the gait trainee is received. In addition, the knee joint part 152 may provide a frame to maintain the knee joint hyperextended through the flexion and extension of the knee joint in a correct posture while gait.

The ankle joint part 153 may be provided to correspond to an ankle joint position (or ankle area) of the gait trainee and may operate an ankle joint of the gait trainee, and also may have a structure in which the ankle joint of the gait trainee maintains a balance along a moving path of a pressure center according to a gait cycle under its own body weight conditions or which induces plantar flexion and dorsiflexion. For example, the ankle joint part 153 may provide a frame to maintain a posture with high muscle tension in plantar flexion and dorsiflexion, adduction and abduction, and inversion and eversion of the ankle joint in a correct posture suitable for the gait. In particular, the ankle joint part 111 may provide a structure that assists rotational force generated in plantar flexion and dorsiflexion movement with a spring, thereby assisting an output of a motor and making its size to be compact and lightweight.

The ankle joint part 153 may effectively provide ankle movement of the gait trainee, minimize torque required for the ankle movement of the gait trainee, and prevent strain on the ankle of the gait trainee during the gait training using the walking practice robot 150.

Here, the walking practice robot 150 may adjust positions of the hip joint part 151, the knee joint part 152, and the ankle joint part 153 so as to match the lower body information of the gait trainee and may train the gait trainee according to a gait training pattern. The walking practice robot 150 may adjust the positions of the hip joint part 151, the knee joint part 152, and the ankle joint part 153 to match the lower body information of the gait trainee, and the hip joint part 151 and the knee joint part 152 may be respectively disposed to match the hip joint and the knee joint of the gait trainee, and thus, the distance between the hip joint part 151 and the knee joint part 152 may vary depending on the distance between the hip joint and the knee joint, and the knee joint part 152 and the ankle joint part 153 may be respectively disposed to match the knee joint and the ankle joint of the gait trainee, so that the distance between the knee joint part 152 and the ankle joint part 153 varies depending on the distance between the knee joint and the ankle joint.

For example, the walking practice robot 150 may have a structure that is capable of adjusting a length of a segment disposed between joints of the gait trainee and a position of a fixing part in three dimensions, and may adjust an unstable pelvis and upper body to a desired position in three-dimensional space to maintain a posture suitable for the gait, and may adjust a posture suitable for each stage in various training of the gait trainee. In addition, the fixing position and posture of the frame may be adjusted in consideration of the bending or contraction of the body of the gait trainee.

In addition, the walking practice robot 150 may train the gait trainee according to the gait training pattern and may drive each joint part in the state in which the gait trainee wears the walking practice robot 150 to allow each joint part to be suitable for each joint so that each joint of the gait trainee moves according to the gait training pattern, and may train the gait trainee with the customized gait training pattern that is suitable for the gait trainee.

Thus, the gait training apparatus 100 according to the present invention may train the gait trainee according to the gait training pattern generated by the training pattern generation part 130 through the walking practice robot 150, and the positions of the hip joint part 151, the knee joint part 152, and the ankle joint part 153 may be adjusted to match the lower body information of the gait trainee, thereby providing effective gait training suitable for the gait trainee.

As described above, in the present invention, the gait training pattern may be generated according to the lower body information of the gait trainee and the gait training conditions to generate the gait training pattern that is suitable for the gait trainee, which does not cause the discomfort to the gait trainee. That is, the distance between the hip joint and the knee joint of the gait trainee, the distance between the knee joint and the ankle joint, the height of the ankle joint from the ground when standing upright, and the length of the foot or shoe of the gait trainee may be reflected to generate the gait training pattern that is suitable for each joint of the gait trainee, and also the gait training pattern optimized for the gait trainee may be generated, and thus, each joint of the gait trainee may move naturally during the gait training so that the gait trainee feels no discomfort, and the training effect is improved. Here, the gait pattern corresponding to the lower body information of the gait trainee may be determined from the standard gait pattern table, in which the gait pattern is stored for each lower body condition, to acquire the simple gait pattern with the high matching rate, thereby generating the optimal gait training pattern. In addition, the gait pattern determined from the standard gait pattern table may be corrected by reflecting the length of the foot or she, etc., to prevent the foot dragging during the gait training while maintaining the movement of each joint, which is suitable for the gait trainee. In addition, the gait trainee may be trained according to the gait training pattern generated by the training pattern part through the walking practice robot, and the positions of the hip joint, the knee joint, and the ankle joint may be adjusted according to the lower body information of the gait trainee to provide the effective gait training suitable for the gait trainee.

Although preferred embodiments of the present invention have been described with reference to a number of illustrative embodiments thereof, the embodiments of the present invention are not limited to the foregoing embodiments, and thus, it should be understood that numerous other modifications and embodiments may be devised by those skilled in the art that will fall within the spirit and scope of the principles of this invention. Hence, the real protective scope of the present invention shall be determined by the technical scope of the accompanying claims.

**Claims**

1. A gait training pattern generation method comprising:

    acquiring lower body information of a gait trainee;
    setting gait training conditions for the gait trainee; and
    generating a gait training pattern according to the lower body information of the gait trainee and the gait training conditions.

2. The gait training pattern generation method of claim 1, wherein the acquiring the lower body information comprises:

measuring a distance between a hip joint and a knee joint of the gait trainee;
measuring a distance between the knee joint and an ankle joint of the gait trainee;
measuring a height of the ankle joint from a ground when standing upright; and
measuring a length of a foot or shoe of the gait trainee.

3. The gait training pattern generation method of claim 2, wherein the setting the gait training conditions comprises setting a training stride according to the gait trainee.

4. The gait training pattern generation method of claim 3, wherein the setting the gait training conditions further comprises setting the height of the ankle joint from the ground during gait.

5. The gait training pattern generation method of claim 1, further comprising providing a customized stride based on the lower body information of the gait trainee.

6. The gait training pattern generation method of claim 2, wherein the generating the gait training pattern comprises determining a gait pattern from a standard gait pattern table stored for each lower body condition.

7. The gait training pattern generation method of claim 6, wherein the generating the gait training pattern further comprises correcting the gait pattern by reflecting the lower body information of the gait trainee and the gait training conditions.

8. The gait training pattern generation method of claim 7, wherein the correcting the gait pattern comprises adjusting coordinates of each joint of the gait pattern, which are determined in the standard gait pattern table, according to the distance between the hip joint and the knee joint, the distance between the knee joint and the ankle joint, the height of the ankle joint, and a training stride.

9. The gait training pattern generation method of claim 8, wherein the correcting the gait pattern further comprises calculating a joint angle of each joint of the gait pattern through the adjusted coordinates of each joint of the gait pattern.

10. The gait training pattern generation method of claim 9, wherein the correcting the gait pattern further comprises changing the joint angle of the knee joint of the gait pattern using the length of the foot or shoe and the height of the ankle joint.

11. The gait training pattern generation method of claim 9, wherein the correcting the gait pattern further comprises changing the joint angle of at least one of the hip joint, the knee joint and the ankle joint at at least a portion of the gait pattern through the distance between the hip joint and the knee joint, the distance between the knee joint and the ankle joint, and the height of the shoe.

12. The gait training pattern generation method of claim 8, further comprising acquiring an inclination of the ground on which the gait trainee walks,
wherein the correcting the gait pattern is performed by further reflecting the inclination of the ground.

13. The gait training pattern generation method of claim 12, wherein the correcting the gait pattern further comprises further adjusting the adjusted coordinates of each joint of the gait pattern by reflecting the inclination of the ground.

14. A gait training apparatus comprising:

a lower body information acquisition part configured to acquire lower body information of a gait trainee;
a training setting part configured to set gait training conditions for the gait trainee; and
a training pattern generation part configured to generate a gait training pattern according to the lower body information of the gait trainee and the gait training conditions.

15. The gait training apparatus of claim 14, wherein the lower body information acquisition part comprises:

a joint distance acquisition part configured to acquire a distance between a hip joint and a knee joint of the gait trainee and a distance between the knee joint and an ankle joint of the gait trainee;

an ankle joint height acquisition part configured to acquire a height of the ankle joint from a ground when standing upright; and

a foot size acquisition part configured to acquire a length of a foot or shoe of the gait trainee.

16. The gait training apparatus of claim 15, wherein the training setting part comprises a stride setting part configured to set a training stride depending on the gait trainee.

17. The gait training apparatus of claim 16, wherein the training setting part further comprises a height setting part configured to set the height of the ankle joint from the ground during gait.

18. The gait training apparatus of claim 14, further comprising a customized stride providing part configured to provide a customized stride based on the lower body information of the gait trainee.

19. The gait training apparatus of claim 15, wherein the training pattern generation part comprises:

a table storage part in which a standard gait pattern table stored a gait pattern for each lower body condition is stored; and

a gait pattern determination part configured to determine the gait pattern from the standard gait pattern table.

20. The gait training apparatus of claim 19, wherein the training pattern generation part further comprises a gait pattern correction part configured to correct the gait pattern by reflecting the lower body information of the gait trainee and the gait training conditions.

21. The gait training apparatus of claim 20, wherein the gait pattern correction part comprises a coordinate adjustment part configured to adjust coordinates of each joint of the gait pattern, which are determined in the standard gait pattern table, according to the distance between the hip joint and the knee joint, the distance between the knee joint and the ankle joint, the height of the ankle joint, and a training stride.

22. The gait training apparatus of claim 21, wherein the gait pattern correction part further comprises a joint angle calculation part configured to calculate a joint angle of each joint of the gait pattern through the adjusted coordinates of each joint of the gait pattern.

23. The gait training apparatus of claim 22, wherein the gait pattern correction part further comprises a joint angle changing part configured to change the joint angle of the knee joint of the gait pattern using the length of the foot or shoe and the height of the ankle joint.

24. The gait training apparatus of claim 22, wherein the gait pattern correction part further comprises a joint angle changing part configured to change the joint angle of at least one of the hip joint, the knee joint and the ankle joint at at least a portion of the gait pattern through the distance between the hip joint and the knee joint, the distance between the knee joint and the ankle joint, and the height of the shoe.

25. The gait training apparatus of claim 21, further comprising an inclination acquisition part configured to acquire an inclination of the ground on which the gait trainee walks,

wherein the gait pattern correction part is configured to correct the gait pattern by further reflecting the inclination of the ground.

26. The gait training apparatus of claim 25, wherein the coordinate adjustment part is configured to further adjust the adjusted coordinates of each joint of the gait pattern by reflecting the inclination of the ground.

27. The gait training apparatus of claim 15, further comprising a walking practice robot that is wearable by the gait trainee and has a hip joint part, a knee joint part, and an ankle joint part, which correspond to the hip joint, the knee joint, and the ankle joint, respectively,

wherein the walking practice robot is configured to adjust positions of the hip joint part, the knee joint part and the ankle joint part so as to match the lower body information of the gait trainee and train the gait trainee according to the gait training pattern.

## FIG. 1

OBTAIN INFORMATION ABOUT
LOWER BODY OF GAIT TRAINEE — S100

SET GAIT TRAINING CONDITIONS
FOR GAIT TRAINEE — S200

GENERATE GAIT TRAINING PATTERN
ACCORDING TO INFORMATION ABOUT
LOWER BODY OF GAIT TRAINEE
AND GAIT TRAINING CONDITIONS — S300

# FIG. 2

(a)

(b)

## FIG. 3

## FIG. 4

## FIG. 5

(a)

(b)

## FIG. 6

(a)

(b)

# FIG. 7

100

| LOWER BODY INFORMATION ACQUISITION PART | ~110 |

| TRAINING SETTING PART | ~120 |

| TRAINING PATTERN GENERATION PART | ~130 |

# FIG. 8

150

151

152

20

153

# INTERNATIONAL SEARCH REPORT

| International application No. |
|---|
| **PCT/KR2023/006445** |

| A. | CLASSIFICATION OF SUBJECT MATTER |
|---|---|

**A61H 1/02**(2006.01)i; **B25J 9/00**(2006.01)i

According to International Patent Classification (IPC) or to both national classification and IPC

| B. | FIELDS SEARCHED |
|---|---|

Minimum documentation searched (classification system followed by classification symbols)

A61H 1/02(2006.01); A61B 5/00(2006.01); A61B 5/11(2006.01); A61H 3/00(2006.01); B25J 13/08(2006.01); G06T 7/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 보행(walk), 훈련(training), 하체 정보(lower body information), 조건(condition), 패턴(pattern)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0079034 A (KOREA NATIONAL UNIVERSITY OF TRANSPORTATION INDUSTRY-ACADEMIC COOPERATION FOUNDATION) 05 July 2019 (2019-07-05) See paragraphs [0016]-[0065], claims 1 and 3 and figure 3. | 1-27 |
| Y | KR 10-2336728 B1 (DIGITAL HUMAN LAB CO., LTD.) 08 December 2021 (2021-12-08) See paragraph [0039] and claim 1. | 1-27 |
| Y | KR 10-2018-0041880 A (INDUSTRY ACADEMIC COOPERATION FOUNDATION, DAEGU UNIVERSITY) 25 April 2018 (2018-04-25) See claims 1-3. | 3,4,16,17 |
| Y | KR 10-2193768 B1 (SAMSUNG ELECTRONICS CO., LTD.) 22 December 2020 (2020-12-22) See paragraph [0064] and figure 1. | 12,13,25,26 |
| A | KR 10-2238707 B1 (RBIOTECH CO., LTD.) 12 April 2021 (2021-04-12) See claim 1 and figure 3. | 1-27 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006445**

| Patent document cited in search report | | | Publication date (day/month/year) | Patent family member(s) | | | Publication date (day/month/year) |
|---|---|---|---|---|---|---|---|
| KR | 10-2019-0079034 | A | 05 July 2019 | KR | 10-2020129 | B1 | 09 September 2019 |
| KR | 10-2336728 | B1 | 08 December 2021 | None | | | |
| KR | 10-2018-0041880 | A | 25 April 2018 | KR | 10-1912320 | B1 | 26 October 2018 |
| KR | 10-2193768 | B1 | 22 December 2020 | KR | 10-2015-0084444 | A | 22 July 2015 |
| | | | | US | 2015-0197008 | A1 | 16 July 2015 |
| | | | | US | 9566706 | B2 | 14 February 2017 |
| KR | 10-2238707 | B1 | 12 April 2021 | None | | | |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080010072